Europäisches Patentamt

European Patent Office

Office européen des brevets

(11) Veröffentlichungsnummer: **0 056 168**
A2

(12) # EUROPÄISCHE PATENTANMELDUNG

(21) Anmeldenummer: 81110862.0

(22) Anmeldetag: 31.12.81

(51) Int. Cl.³: **G 01 G 1/02,** G 01 G 1/08

(30) Priorität: **08.01.81 DE 3100327**

(43) Veröffentlichungstag der Anmeldung: **21.07.82 Patentblatt 82/29**

(84) Benannte Vertragsstaaten: **AT BE FR GB IT NL SE**

(71) Anmelder: **Ideee Design GmbH, Luisenstrasse 91, D-5600 Wuppertal 1 (DE)**

(72) Erfinder: **Esch, Ernst E., Luisenstrasse 91, D-5600 Wuppertal 1 (DE)**

(74) Vertreter: **Sturies, Herbert et al, Patentanwälte Dr. Ing. Dipl. Phys. Herbert Sturies Dipl. Ing. Peter Eichler Postfach 20 12 42, D-5600 Wuppertal 2 (DE)**

(54) **Waage, insbesondere Briefwaage.**

(57) Die erfindungsgemäß aus einer äußeren Doppelscheibe (2, 2') und einer darin exzentrisch gelagerten, mit einer Aufhängung (11) versehenen Mittelscheibe (4) bestehende Waage ist als Hebelwaage ausgeführt, wobei die Hebel so angeordnet sind, daß die Gleichgewichtsbedingung für das Drehmoment der Last durch die Schwerkraft des Kraftarmes erfüllt wird, derart, daß bei steigender Belastung der Waage durch die geometrische Anordnung der Hebel automatisch der Kraftarm größer und der Lastarm kleiner wird. Das an der Waage hängende Gewicht gibt eine Skalenteilung der Mittelscheibe (4) an, wobei die dem Betrachter zugewandte Scheibe (2') der Doppelscheibe den zur Skalenteilung gehörigen Zeiger bildet.

0056168

Ideee Design GmbH, Luisenstr. 91, 5600 Wuppertal 1

======================================================

Waage, insbesondere Briefwaage

Die Erfindung betrifft eine Waage, insbesondere Briefwaage, die als Hebelwaage ausgeführt ist, wobei die Hebel so angeordnet sind, daß die Gleichgewichtsbedingung für das Drehmoment der Last durch die Schwerkraft des Kraftarmes erfüllt wird, wobei bei steigender Belastung der Waage durch die geometrische Anordnung der Hebel automatisch der Kraftarm größer und der Lastarm zunächst größer und dann kleiner wird.

-2-

Bei bekannten Ausgestaltungen von Waagen dieser Art ist festzustellen, daß sie aus einer Vielzahl von Einzelteilen bestehen und oft nur einen für die praktische Anwendung unzureichenden Meßbereich aufweisen. Hinzu kommt, daß die Skalierung nicht geeignet ist, eine hinreichend exakte Ablesung zu ermöglichen, weil die Abstände der Skalenteilungen zu eng sind.

Aufgabe der Erfindung ist es, insbesondere, d.h. zusätzlich zu den sich aus Beschreibung und Ansprüchen ergebenden Aufgabenstellungen eine gattungsgemäße Waage von herstellungs- und montagetechnisch einfachem gebrauchsvorteilhaften Aufbau und ästhetisch optimalem Aussehen anzugeben.

Gelöst wird diese Aufgabe erfindungsgemäß dadurch, daß der Außenkörper der Waage als Doppelscheibe besteht, an dem die Last befestigt wird, deren Scheibenteile durch ein Ringsegment auf Abstand gehalten werden und zwischen denen eine weitere Scheibe exzentrisch drehbar gelagert ist.

Zufolge derartiger Ausgestaltung ist eine gattungsgemäße Waage, insbesondere Briefwaage vom erhöhten Gebrauchswert geschaffen. Die Doppelscheibe mit ihrem hohen Eigengewicht dient als Kraftarm, während die Scheibe, die in dem Außenkörper gelagert wird in der Aufbewahrungsstellung geschützt ist, dies betrifft insbesondere Informationen, die auf der Scheibe aufgedruckt sind, hier im wesentlichen die Skalenteilung für die Meßwertaussage.

-3-

Eine vorteilhafte Bauform ist gemäß der Erfindung dadurch verwirklicht, daß die Last an dem Außenkörper befestigt ist, wobei der Befestigungspunkt in einem Abstand (x, y) vom Drehpunkt des Außenkörpers befestigt ist. Erfindungsgemäß ist dabei von Vorteil, daß sich bei zunehmender Belastung der Hebelarm für die Last zunächst vergrößert, was in diesem Bereich zu einer exakteren Anzeige führt, bei weiterer Belastung nimmt der Hebelarm der Last stetig ab, während der Hebelarm der Kraft bei zunehmender Belastung stetig größer wird, was ermöglicht, einen für die Praxis angemessenen großen Meßbereich zu erzielen.

In diesem Zusammenhang erweist es sich auch als vorteilhaft, die Befestigungsbohrung für den Kunststoff-Faden mit einer Ringwulst zu umgeben, weil dadurch bei Handhabung der Waage der Kunststoff-Faden nicht am Außengehäuse reiben und so zu einer Meßwertbeeinträchtigung führen kann.

Es hat sich auch als zweckmäßig gezeigt, die Last über einen flexiblen monofilen oder multifilen Kunststoff-Faden, der mit einer Krokodilklemme versehen ist, aufzubringen, weil der Bauteileaufwand zur Erfüllung dieser Funktion sehr niedrig ist.

Hier ist es besonders vorteilhaft, den Kunststoff-Faden in die Befestigungsbohrung einzuschweißen, so wird eine sichere und einfach herstellbare Verbindung erzeugt.

Für die Fertigung beispielsweise in Heimarbeit-Betrieben oder

-4-

Rehabilitationszentren kann der Kunststoff-Faden aber auch in einfacher und sicherer Weise durch einen Knoten festgelegt werden.

Weiter kann als vorteilhaft im Sinne der Erfindung angesehen werden, daß die zwischen dem Außenkörper gelagerte Scheibe mit materialeinheitlichen angeformten Achsstummeln versehen ist, die an ihren Stirnflächen angeschrägt sind, sodaß sich die Scheibe leicht und einfach montieren läßt, wobei die Anschrägung so gelegt ist, daß bei Gebrauch der Waage die längere Seite der Achsstummel belastet wird, sodaß die Scheibe gegen ungewollte Demontage gesichert ist.

In vorteilhafter Weise ist die Scheibe mit einer Aufhängebohrung versehen, die zur Befestigung der Waage in Gebrauchsstellung dient oder mit der die Waage während des Gebrauches gehalten werden kann.

Günstigerweise legt man entsprechend der Erfindung die Aufhängebohrung so, daß sie bei Nichtgebrauchsstellung der Waage im zusammengeklappten Zustand von Griffmulden, die sich im Außenkörper befinden, nicht überdeckt wird, sodaß sich die Waage leicht und einfach auseinanderdrehen läßt.

Die Anordnung des Drehpunktes der Waage ist so gewählt, daß in vorteilhafter Weise die Scheibe im zusammengeklappten Zustand völlig zwischen den Doppelscheiben des Außenkörpers aufgenommen wird. Dies ist deshalb von Vorteil, weil die Scheibe damit bei Nichtgebrauch geschützt ist und somit vor allem die Skale und evtl. sonstige Bedruckung oder anderwertige Markierung der Scheibe geschont wird.

Es hat sich auch als vorteilhaft erwiesen, die Außenflächen des Außengehäuses mit Noppen oder anderen haptisch günstigen Strukturen zu versehen und die Handhabung der Waage zu vereinfachen und die Waage ästhetisch schön zu gestalten.

Zweckmäßigerweise läßt sich als Werkstoff für den Außenkörper und die Scheibe thermoplastischer Kunststoff verwenden, der sich in energiesparender Weise umformen läßt und womit sich die genannten Einzelteile in einfacher und kostengünstiger Weise herstellen lassen.

Für die Handhabung und den Gebrauch hat sich als Grundform des Außenkörpers und der Scheibe der Waage der Kreis dargestellt.

Es ist jedoch auch denkbar, daß sich in vorteilhafter Weise andere regelmäßige Vielecke als Grundform des Außenkörpers und der Scheibe einsetzen lassen.

Damit die Scheibe bei Nichtgebrauchsstellung beispielsweise nicht durch die Schwerkraft aus dem Außenkörper fallen kann, wird in vorteilhafter Art an der Innenseite des Außengehäuses ein Bremsnocken vorgesehen.

-6-

Günstig hat sich erwiesen, den Bremsnocken so anzuordnen, daß er bei Nichtgebrauchsstellung in die Haltebohrung/das Griffloch der Scheibe ragt, sodaß bei Betätigung der Scheibe ein Schnapprasteffekt auftritt.

Vorteilhaft erweist es sich im Sinne der Erfindung, wenn der Bremsnocken materialeinheitlich angeformt ist.

Weiter wird es als zweckmäßig und gestalterisch besser angesehen, wenn eine der Bohrungen für die Lagerung der Scheibe als Sackbohrung ausgeführt ist.

Zweckmäßig und praktisch, ebenso Einzelteile sparend ist es, wenn die dem Betrachter zugewandte Seite der Scheibe eine Skalenteilung aufweist und die ebenfalls dem Betrachter zugewandte Seite des Außenkörpers einen dem an der Waage hängenden Gewicht entsprechenden Skalenabschnitt zum Ablesen freigibt.

Dabei hat sich als vorteilhaft erwiesen, daß die Skalenteilung aus bestimmten Gewichten zugeordneten Skalenbögen besteht, die der Betrachterseite zugekehrt sind und daß diese längs des oberen Umfangabschnittes der Außenkörperscheibe sowie in Abhängigkeit der Exzentrizität zwischen Scheibe und Außenkörperscheibe verlaufen.

Vorteilhaft wird die Skale durch aufdrucken, aufsiegeln angebracht oder materialeinheitlich gestaltet.

-7-

Letztlich ist es günstig und zeitsparend, wenn auf der dem Betrachter zugewandten Seite der Doppelscheibe ein Aufkleber angebracht ist, der wichtige Informationen, z.B. Portogebühren, enthält.

Die Erfindung wird an Hand der folgenden Figuren erläutert, so zeigt:

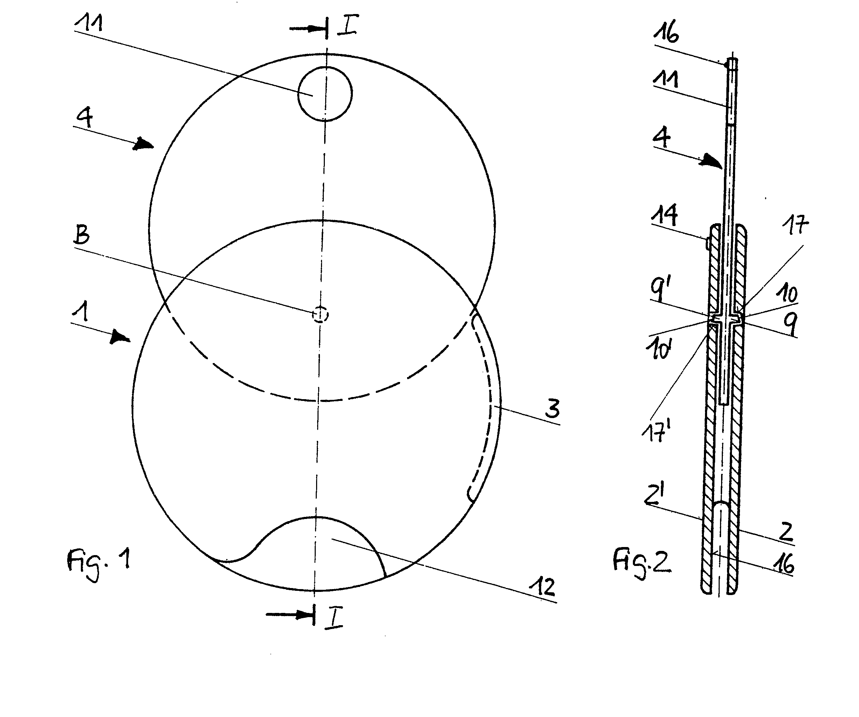

Fig. 1    die Vorderansicht der Waage in Gebrauchsstellung

Fig. 2    einen Schnitt I-I entsprechend der Fig. 1

Fig. 3    die Rückansicht der Waage

Fig. 4    die Vorderansicht der Waage in Nichtgebrauchsstellung

Fig. 5    eine Seitenansicht der Waage in Nichtgebrauchsstellung

Fig. 6    einen Schnitt durch die Befestigungsstelle des
          Kunststoff-Fadens, gemäß eines weiteren Ausführungsbeispiels der Erfindung und

Fig. 7    einen Teilausschnitt ähnlich Fig. 2.

-8-

Die Waage besitzt einen doppelscheibenförmigen Außenkörper (1), der im wesentlichen von den Scheibenteilen (2,2`) gebildet wird, die durch ein Ringsegment (3) auf Abstand gehalten werden, sodaß eine Scheibe (4) drehbar zwischen den Scheibenteilen (2,2`) gelagert werden kann.

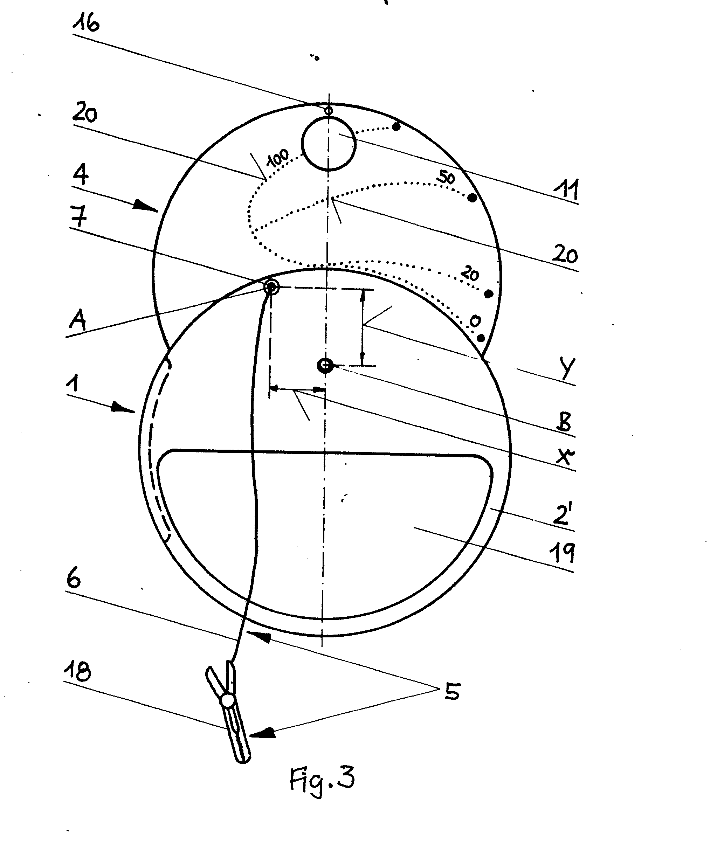

Die Lastbefestigung (5) ist an dem Außenkörper (1) vorgesehen und zwar so, daß der Befestigungspunkt (A) einen Abstand (X) und einen Abstand (Y) (Fig. 3) von der Drehachse (B) aufweist, damit wird erreicht, daß bei zunehmender Belastung der wirksame Hebelarm der Last zunächst zunimmt, was die Anzeigegenauigkeit steigert, und bei noch größerer Belastung wieder abnimmt, was den Meßbereich vergrößert.

Die Befestigungsbohrung ist mit einer Ringwulst (14) umgeben, sodaß der Kunststoff-Faden (6) bei Gebrauch nicht an den Scheibenteilen (2) und/oder (2`) reibt und dadurch das Meßergebnis beeinträchtigt.

Der Kunststoff-Faden (6) kann monofil oder multifil ausgeführt sein und ist mit einer Krokodilklemme (18) verbunden, mit der die eigentliche, nicht dargestellte Last gehalten wird, um somit die Gewichtskraft auf die Waage zu übertragen.

Der Kunststoff Faden (6) kann in Befestigungsbohrung (7) eingeschweißt sein, was sich sehr leicht mit einem heißen Draht bewerkstelligen läßt.

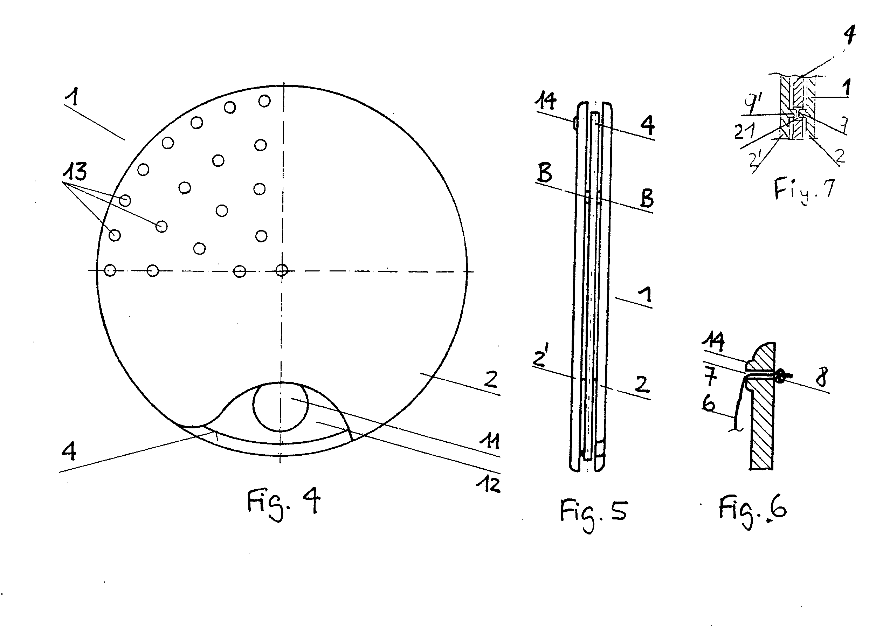

In einem anderen Ausführungsbeispiel der Erfindung ist der Kunststoff-Faden (6) durch einen Knoten in der Befestigungsbohrung (7) festgelegt (Fig. 6).

An der Scheibe (4) sind materialeinheitlich Achsstummel (9,9`) angeformt, die an ihren Stirnflächen (1o, 1o`) angeschrägt sind, sodaß sich die Scheibe einfach montieren läßt über die elastische Verformbarkeit des Außenkörpers (1); die angeschrägten Stirnflächen sind dabei so angelegt, daß im Gebrauch ihre längere Seite belastet wird, siehe Fig. 2.

In der Scheibe (4) ist für den Gebrauch eine Aufhängebohrung und/oder Griffloch vorgesehen, an dem die Wage für den Waagevorgang gehalten werden kann.

Damit die Scheibe (4) einfach und leicht aus der Nichtgebrauchsstellung (Fig. 4, Fig. 5) gebracht werden kann, ist in einem oder beiden Seitenteilen (2, 2`) eine Griffmulde (12) vorgesehen und zwar so, daß in der Nichtgebrauchsstellung das Griffloch (11) innerhalb der Griffmulde (12) liegt, sodaß die Scheibe leicht herausgeschwenkt werden kann.

Die Drehachse (B) der Scheibe ist so angeordnet, daß sie in Nichtgebrauchsstellung völlig im Außenkörper (1) verschwindet, sodaß Aufdrucke, Skalen in der Nichtgebrauchsstellung geschont sind.

- 1o -

Um die Haptik zu verbessern, sind an dem Außenkörper (1) Griffnoppen (13) materialeinheitlich angeformt worden.

Damit die Scheibe (4) bei Nichtgebrauchsstellung nicht durch ihre eigene Schwerkraft aus dem Außengehäuse fällt, ist ein Bremsnocken (16) vorgesehen, der beim Einklappen der Scheibe (4) an der Innenseite (15) des Außenkörpers (1) reibt und somit die Scheibe (4) entgegen ihrer Schwerkraft in der Nichtgebrauchsstellung hält.

In einer nicht dargestellten Ausführung der Erfindung ist der Bremsnocken (16) an der Innenseite (16) des Außenkörpers (1) materialeinheitlich angeformt und zwar so, daß er bei Nichtgebrauchsstellung innerhalb der Aufhängebohrung (11) angeordnet ist, sodaß beim Einklappen und Ausklappen der Scheibe ein Schnapp-Rast-Effekt entsteht.

Aus optischen Gründen ist eine der Bohrungen (17, 17`) als Sacklochbohrung ausgeführt.

Der Aufkleber (19) dient als Informationsträger.

Die Skale (2o) mit ihren Skalenbögen (z.B. 21), die einzelnen Gewichten zugeordnet sind, ermöglicht ein schnelles und sicheres Erfassen der angezeigten Waagenbelastung.

- 11 -

Fig. 7 zeigt die Scheibe 4 zwischen dem zweiteiligen Außenkörper 1, der an seinen Scheibenteilen 2, 2' jeweils einen Achsstummel 9, 9' hat. Ein Achsstummel 9 und ein Scheibenteil 2 bzw. 2' und 9' sind jeweils einstückig und ragen in eine Bohrung 21 der Scheibe 4. Sie lagern die Scheibe 4 schwenkbeweglich außerhalb des Schwerpunkts des Außenkörpers 1. Zum Montieren der Scheibe 4 werden die Scheibenteile 2, 2' des Außenkörpers 1 etwas auseinandergedrückt und die Scheibe 4 in die dargestellte Position gebracht. Dann springen die Scheibenteile 2, 2' infolge ihrer Elastizität in die dargestellte Lage zurück, in der die Achsstummel 9, 9' nahezu aneinanderstoßen.

0056168

- 12 -

<u>Patentansprüche</u>

1. Waage, insbesondere Briefwaage, die als Hebelwaage ausgeführt ist, wobei die Hebel so angeordnet sind, daß die Gleichgewichtsbedingung für das Drehmoment der Last durch die Schwerkraft des Kraftarmes erfüllt wird, wobei bei steigender Belastung der Waage durch die geometrische Anordnung der Hebel automatisch der Kraftarm größer und der Lastarm zunächst größer und dann kleiner wird, d a d u r c h  g e k e n n z e i c h n e t, daß der Außenkörper (1) der Waage als flache Doppelscheibe (2, 2') ausgeführt ist, die durch ihr Eigengewicht das Drehmoment der Kraft erzeugt und zwischen der eine Scheibe (4) exzentrisch drehbar gelagert ist.

2. Waage nach Anspruch 1, d a d u r c h  g e k e n n - z e i c h n e t, daß die Lastbefestigung dem Außenkörper (1) vorgesetzt ist, wobei der Befestigungspunkt (A) einen Abstand (X) und einen weiteren Abstand (Y) von der Drehachse (B) aufweist (Fig. 3) und daß die Befestigungsbohrung (7) mit einer Ringwulst (14) umgeben ist.

3. Waage nach Anspruch 1 oder 2, d a d u r c h  g e - k e n n z e i c h n e t, daß eine Scheibe (2, 2') des Außenkörpers (1) eine von einem Ringwulst (14) um-

- 13 -

. gebene Befestigungsbohrung (7) für einen flexiblen, eine Krokodilklemme (18) zur Lastenaufhängung tragenden Kunststoff-Faden (6) aufweist.

4. Waage nach einem der Ansprüche 1 bis 3, d a d u r c h

g e k e n n z e i c h n e t, daß bei der die Scheibe (4) und/oder der Außenkörper (1) aus thermoplastischem Kunststoff bestehen und vorzugsweise materialeinheitlich angeformte Achsstummel (9, 9') an der Scheibe (4) oder insbesondere am Außenkörper (1) zur formschlüssigen Verbindung beider vorhanden sind.

5. Waage nach einem der Ansprüche 1 bis 4, d a d u r c h

g e k e n n z e i c h n e t, daß die Position der Drehachse (B) der Scheibe (4) im Außenkörper (1) so gewählt ist, daß im zusammengeschobenen Zustand (Fig. 4, 5) der Waage die Scheibe zwischen den Scheibenteilen (2, 2') im Außenkörper (1) aufgenommen wird.

6. Waage nach einem der Ansprüche 1 bis 5,

d a d u r c h    g e k e n n z e i c h n e t, daß die

Grundform des Außenkörpers (1) und der Scheibe (4) der Kreis oder ein geometrisches gleichseitiges Vieleck ist, wobei die Außenkörper (1) und der Scheibe (4) die gleiche

geometrische Grundform aufweisen.

- 14 -

7. Waage nach einem der Ansprüche 1 bis 6, d a d u r c h g e k e n n z e i c h n e t, daß an der Innenseite (15) des Außenkörpers (1) oder an der Bremsscheibe (4) eine Bremsnocke (16) materialeinheitlich angeformt ist.

8. Waage nach einem der Ansprüche 1 bis 7, d a d u r c h g e k e n n z e i c h n e t, daß die Scheibe (4) auf der dem Betrachter zugewandten Seite eine Skalenteilung (20) aufweist und das dem Betrachter zugewandte Scheibenteil (2') einen dem an der Waage hängenden Gewicht entsprechenden Skalenabschnitt zum Ablesen freigibt.

9. Waage nach Anspruch 8, d a d u r c h g e k e n n - z e i c h n e t, daß die Skalenteilung aus bestimmten Gewichten zugeordneten Skalenbögen (z.B. 21) besteht und daß die Skalenbögen auf der dem Betrachter zugewandten Seite der Scheibe (4) angeordnet sind und längs des oberen Umfangabschnittes der Doppelscheibe (2') sowie in Abhängigkeit von der Exzentrizität der zwischen Scheibe und Außenkörperscheibe verlaufen.

10. Waage nach einem der Ansprüche 1 bis 9, d a d u r c h g e k e n n z e i c h n e t, daß ein Scheibenteil (2 oder 2') Griffnoppen (13) aufweist und/oder die Skala (20) materialeinheitlich angeformt ist.

0056168

1/3

Fig. 1

Fig. 2

Fig.3

Fig. 4

Fig. 5

Fig. 6

Fig. 7

2/3

0056168